# EUROPEAN PATENT APPLICATION

(11) **EP 1 499 085 A2**
(43) Date of publication of application: **19.01.2005**
(21) Application number: 04015768.7
(22) Date of filing: 05.07.2004
(51) Int. Cl.: H04L 29/06

(54) **Method and apparatus for protocol conversion.**

(30) Priority: 10.07.2003 JP 2003272665
(71) Applicant: NEC CORPORATION, Tokyo (JP)
(72) Inventor: Murai, Yoshinobu, Minato-ku Tokyo (JP); Kitamura, Yutaka, Minato-ku Tokyo (JP)
(74) Representative: Glawe. Delfs. Moll

(57) **Abstract**

A communication apparatus is provided between the first communication network to which a portable terminal is connected and the second communication network having a communication protocol different from that of the first communication network. This apparatus includes a 3G gateway and DTMF detection unit. The 3G gateway performs communication protocol conversion between the first communication network and the second communication network. The DTMF detection unit detects a control signal contained in voice information from the portable terminal. An operation control method for a communication apparatus is also disclosed.

## Description

### Background of the Invention

The present invention relates to a communication apparatus and its operation control method and, more particularly, to a gateway apparatus which connects between a mobile communication network which uses third generation cellular phones and is defined in IT (International Mobile Telecommunications)-2000 and an IP (Internet Protocol) communication network such as a LAN.

With the advent of IMT (International Mobile Telecommunication)-2000, which is a so-called third generation mobile communication system using high-speed communication based on broadband technologies or the CDMA (Code Division Multiple Access) scheme, multimedia communication has been enabled on a full-scale basis in the field of mobile communication using cellular phones.

Under the circumstances, ITU-T (International Telecommunication Union-Telecommunication Sector) has begun to study audiovisual terminals targeted for mobile communication networks. This study has proceeded in the form of extension of PSTN (Public Switched Telephone Network) H.324, and 3GPP (Third Generation Partnership Projects) standard 3G-324M is established. This standard defines the specifications of an audiovisual terminal in IMT-2000; functional elements based on the assumption of audiovisual communication and a communication sequence from the start to the end of communication are defined.

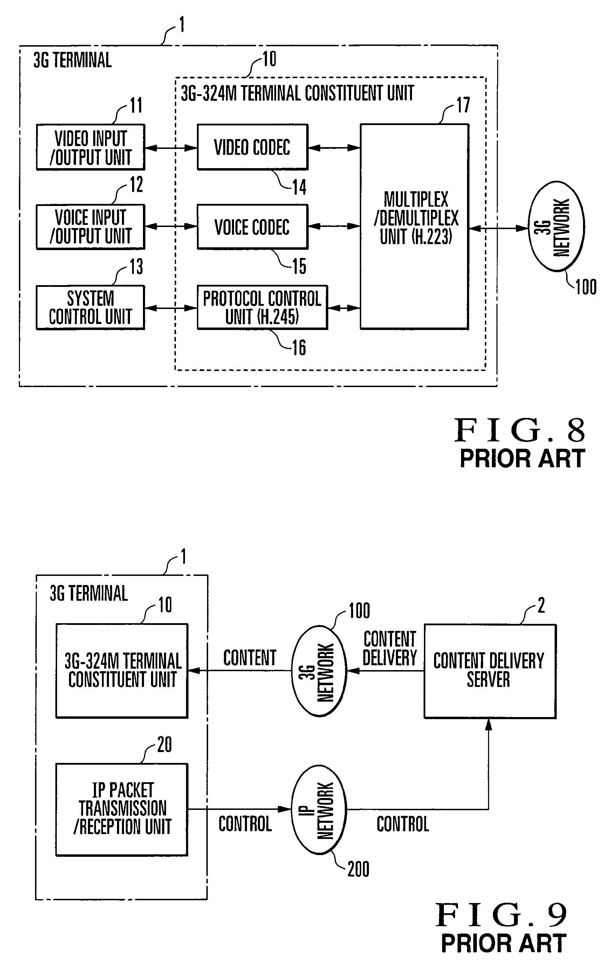

Fig. 8 shows a 3G terminal (cellular phone terminal) 1 conforming to this standard ("W-CDMA Mobile Communication Systems" edited by Keiji Tachikawa, published by Maruzen Co., Ltd. in 2001, pp. 348 - 349). Referring to Fig. 8, a 3G terminal 1 includes a video input/output unit 11 including a camera and display unit, a voice input/output unit 12 including a microphone and speaker, a system control unit 13 which performs system control on the terminal, a video codec 14, a voice codec 15, an H.245 protocol control unit 16, and an H.223 multiplex/demultiplex unit 17.

The video codec 14 performs coding/decoding processing of image signals by the MPEG-4 scheme. The voice codec 15 performs coding/decoding processing of voice signals by the AMR (Adaptive Multiple-Rate) scheme. The protocol control unit 16 performs protocol processing conforming to ITU-T recommendation H.245 for control messages to be exchanged in the respective phases of communication.

The multiplex/demultiplex unit 17 maps image information, voice information, a control message, and the like into one bit string by multimedia multiplexing, and sends it out to the 3G network 100. In contrast, the multiplex/demultiplex unit 17 properly demultiplexes the bit string received from the 3G network 100 into the respective pieces of information. A multimedia multiplex scheme conforming to ITU-T recommendation H.223 is used for the multiplex/demultiplex unit 17.

Note that the video codec 14, voice codec 15, protocol control unit 16, and multiplex/demultiplex unit 17 constitute a "3G-324M terminal" constituent unit 10 defined by 3GPP standard 3G-324M described above.

Fig. 9 shows an example of a system designed to perform content delivery by using the 3G terminal 1 described above. Referring to Fig. 9, the 3G terminal 1 is connected to a 3G network 100. Assume that the 3G terminal 1 includes an IP (Internet Protocol) packet transmission/reception unit (e.g., i-mode (R) function unit) 20 connected to an IP network 200 in addition to the 3G-324M terminal constituent unit 10 shown in Fig. 8.

Contents are received by the 3G-324M terminal constituent unit 10 in the 3G terminal 1 from a content server through the 3G network 100. The user can view and listen to the contents. In this case, when the user wants to receive contents or switch a currently delivered content A to another content B, he/she transmits a control signal for instructing content delivery or switching to a content delivery server 2 through the IP packet transmission/reception unit 20 and IP network 200. This is because there is no means for allowing the user to transmit a control signal to the content delivery server 2 through the 3G network 100.

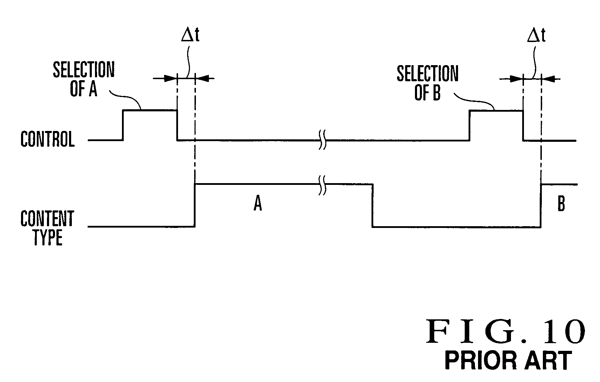

Fig. 10 shows the timing at which the content delivery server 2 starts delivering the content A or performs content switching in response to the above control signal transmitted from the user through the IP network 200 in the above system. As is obvious from Fig. 10, it is inevitable to produce a delay time Δt due to control through the IP network 200 between the instant at which the user issues a command and the instant at which a content is actually displayed. This makes the user feel a sense of discomfort.

Note that in the system arrangement shown in Fig. 9, in order to be directly connected to the 3G network 100, the content delivery server 2 needs to satisfy the requirements for a 3G-324M terminal arrangement conforming to 3GPP standard 3B-324M like the 3G terminal 1. In general, however, the content delivery server 2 has an arrangement conforming to the IP protocol that allows connection to an IP network. It is therefore a challenge to deliver contents to the 3G terminal 1 by using the content delivery server 2 conforming to the current IP protocol.

### Summary of the Invention

It is an object of the present invention to provide a communication apparatus and its operation control method which can deliver contents to a 3G terminal by using a content server conforming to the IP protocol, and can deliver contents to users without any delay with respect to content control.

In order to achieve the above object, according to the present invention, there is provided a communication apparatus which is provided between a first communication network to which a portable terminal is connected and a second communication network having a communication protocol different from that of the first communication network, comprising protocol conversion means for performing communication protocol conversion between the first communication network and the second communication network, and detection means for detecting a control signal contained in voice information from the portable terminal.

### Brief Description of the Drawings

Fig. 1 is a schematic view of a system according to an embodiment of the present invention;
Fig. 2 is a functional block diagram of a 3G terminal in the embodiment of the present invention;
Fig. 3 is a functional block diagram of a 3G gateway according to an embodiment of the present invention;
Fig. 4 is a view showing an example of multiplexing/demultiplexing performed by an H.233 multiplex/demultiplex unit;
Fig. 5 is a view showing an example of a content server in the embodiment of the present invention;
Fig. 6 is a timing chart showing operation in the embodiment of the present invention;
Fig. 7 is a functional block diagram of a 3G gateway according to another embodiment of the present invention;
Fig. 8 is a functional block diagram of a conventional 3G terminal;
Fig. 9 is a view showing an example of a conventional convent delivery system using a 3G terminal; and
Fig. 10 is a timing chart showing operation in the system in Fig. 8.

### Description of the Preferred Embodiments

A communication apparatus (to be referred to as a 3G gateway hereinafter) having a function of performing video and voice transcoding is provided between a 3G mobile communication network and an IP network to allow connection between the 3G mobile communication network and the IP network. Contents are delivered to a 3G portable terminal by using a content server conforming to the IP protocol. This 3G gateway is also provided with a function of detecting a control signal from a 3G portable terminal to allow the user of this 3G portable terminal to control the content server and perform various kinds of control on content creating equipment.

### [First Embodiment]

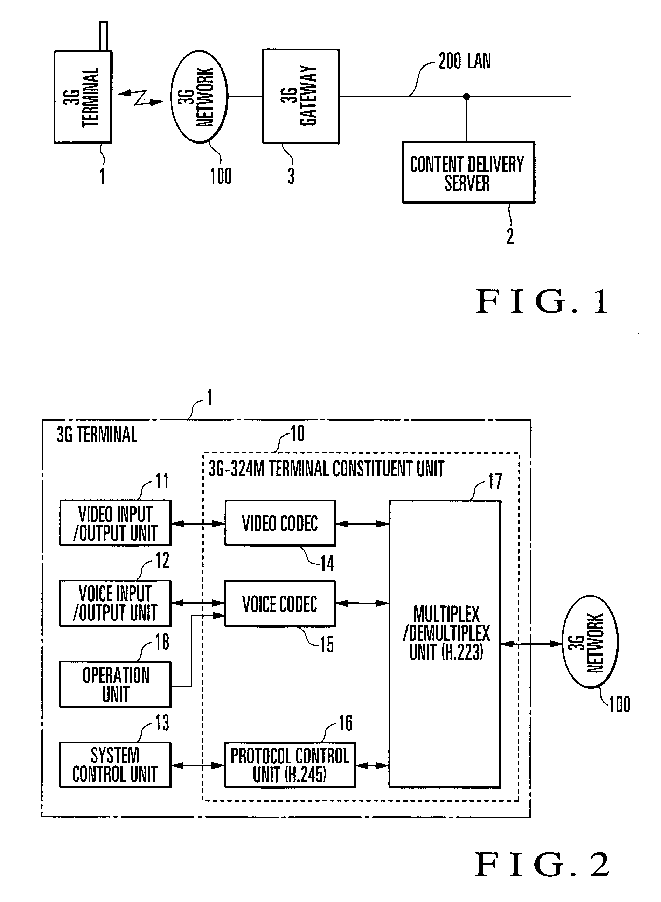

The embodiments of the present invention will be described below with reference to the accompanying drawings. Fig. 1 shows a system to which an embodiment of the present invention is applied. Referring to Fig. 1, a 3G terminal 1 is connected to a 3G gateway 3 through a 3G network 100 which is an IMT-2000 network. The 3G gateway 3 is a communication apparatus for protocol conversion, which performs communication protocol conversion between 3GPP standard 3G-324M defining the specifications of the 3G network 100 and IP defining the specifications of a LAN 200.

The 3G gateway 3, which is a communication apparatus for protocol conversion, enables connection between the 3G network 100 and the LAN 200, thereby enabling connection between the 3G (portable) terminal 1 and the current content delivery server 2 which conforms to the IP protocol.

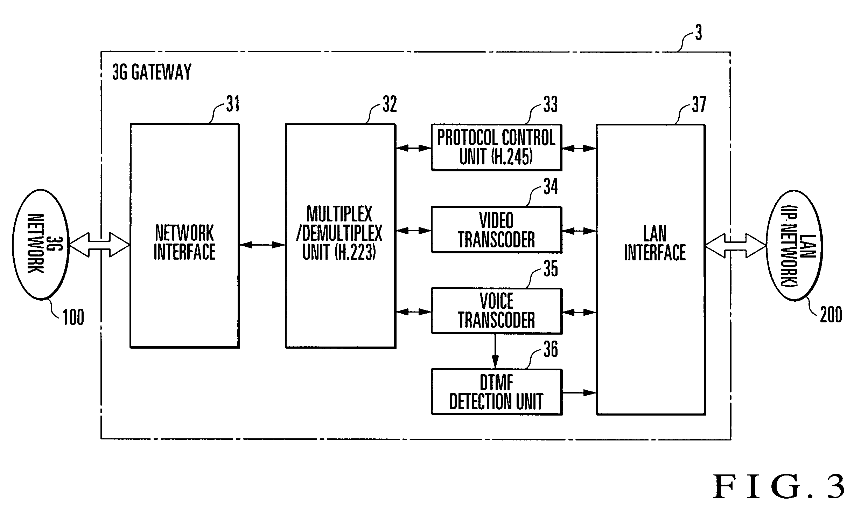

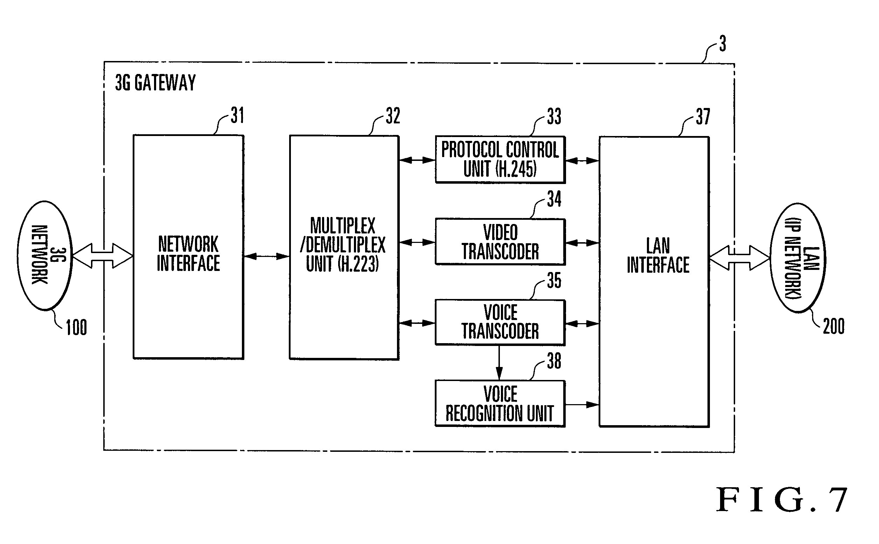

Fig. 2 shows the 3G terminal 1 in Fig. 1. Fig. 3 shows the 3G gateway 3 in Fig. 1. The arrangement of the 3G terminal 1 suitably used for this embodiment will be described first with reference to Fig. 2. The same reference numerals as in Fig. 7 denote the same parts in Fig. 2. In the first embodiment, an operation unit 18 is added to the arrangement shown in Fig. 7 (although an operation unit exists in the arrangement shown in Fig. 7, since the operation unit is irrelevant to the description of the arrangement of the 3G-324M terminal, a description thereof is omitted).

Assume that the operation unit 18 is comprised of a plurality of push buttons including a ten-key pad. Assume also that known DTMFs (Dual Tone Multi-Frequencies) are assigned to at least some of the push buttons, and when such a push button is pressed, the DTMF signal assigned to the button is generated. This DTMF signal is input to a voice codec 15, together with a signal from the microphone of a voice input/output unit 12. The voice codec 15 AMR-codes these input signals. A multiplex/demultiplex unit 17 then maps the signals into one bit string together with an MPEG-4 image signal and control message.

The arrangement of the 3G gateway 3 will be described with reference to Fig. 3. The 3G gateway 3 includes a network interface 31 which interfaces with the 3G network 100, a multiplex/demultiplex unit 32 which performs multiplexing and demultiplexing operations conforming to H.223, a protocol control unit 33 which has a call connection function and conforms to H.245, a video transcoder 34 which transcodes an image signal, a voice transcoder 35 which transcodes a voice signal, a DTMF detection unit 36 which detects a DTMF from an output from the voice transcoder 35, and a LAN interface 37 which interfaces with the LAN 200. Note that the LAN 200 may be an intranet, private network, or broadband communication network (Internet) as long as it is an IP network.

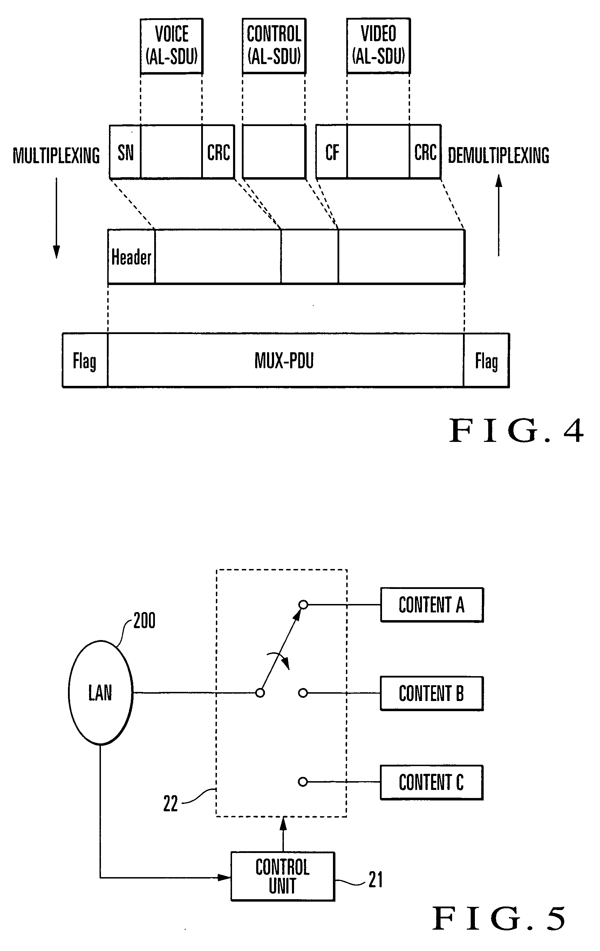

The multiplex/demultiplex unit 32 has a multiplex/demultiplex function conforming to H.223 shown in Fig. 2 or 8, demultiplexes a control message, MPEG-4-coded video signal, and AMR-coded voice signal from one bit string input through the 3G network 100, and inputs the signals to the protocol control unit 33, video transcoder 34, and voice transcoder 35, respectively. In contrast, the multiplex/demultiplex unit 32 receives an MPEG-4-coded video signal from the video transcoder 34, an AMR-coded voice signal from the voice transcoder 35, and a control message from the protocol control unit 33, multiplexes them into one bit string in conformity to H.223, and sends it out to the 3G network 200. Fig. 4 shows an example of this operation. Referring to Fig. 4, reference symbol AL-SDU denotes an adaptation layer service data unit; SN, the serial number of a voice unit; CF, a control field containing the serial number of a video unit; CRC, a cyclic redundancy check code; and MUX-PDU, a multiplex protocol data unit.

The video transcoder 34 transcodes an MPEG-4-coded video signal from the multiplex/demultiplex unit 32 in accordance with a destination. If the destination is a device which handles an MPEG-4 video signal, the video transcoder 34 outputs the MPEG-4-coded signal without any change. If the destination is a TVoIP (Television over Internet Protocol) device such as a videophone, the video transcoder 34 performs coding operation conforming to H.263. In contrast, the video transcoder 34 performs MPEG-4-transcoding of a coded video signal from the LAN 200. If this signal is an MPEG-4-coded video signal, the video transcoder 34 outputs it without transcoding. If the destination is a TVoIP device, the video transcoder 34 transcodes the coded video signal conforming to H.263 into MPEG-4-coded video signal, and outputs it.

In this case, switching between transcoding processing between MPEG-4 and H.263 and the processing of outputting the MPEG-4 signal without transcoding processing is controlled on the basis of the information contained in the header or the like of an input signal to the video transcoder 34.

The voice transcoder 35 transcodes an AMR-coded voice signal from the multiplex/demultiplex unit 32 in accordance with a destination. If the destination is a VoIP (Voice of Internet Protocol) device, the voice transcoder 35 performs coding operation conforming to G.711. If the destination is a device conforming to G.729, the voice transcoder 35 performs corresponding coding operation. In contrast, the voice transcoder 35 converts a coded voice signal from the IP packet transmission/reception unit 20 into a voice signal based on the AMR coding scheme. In this case as well, transcoding processing switching operation is controlled on the basis of the information contained in the header or the like of an input signal to the voice transcoder 35.

The DTMF detection unit 36 detects a DTMF signal from a voice signal in the voice transcoder 35 and outputs it. This detection output is used as a control signal from the content delivery server 2 connected to the LAN 200 in Fig. 1. Note that the protocol control unit 33 performs system control conforming to H.245 in accordance with a control message.

The above 3G gateway 3 has a protocol conversion function between the 3G network 100 and the LAN 200.

Fig. 5 shows an arrangement for content control on the content delivery server 2 in Fig. 1. The detection signal obtained by the DTMF detection unit 36 in Fig. 3 is input to a control unit 21. If this detection signal is a control signal for the selection of a content A, the control unit 21 controls a switch 22 to select the content A and performs control to deliver the content A through the LAN 200. If the DTMF detection signal is a control signal for the selection of a content B, the control unit 21 controls the switch 22 to select the content B.

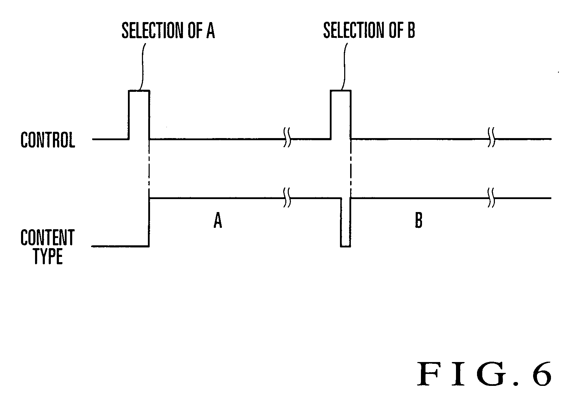

Fig. 6 shows a case wherein a content type is selected in response to pressing operation using a push button on the 3G terminal 1. Content switching control can be performed in real time in accordance with push button operation. Not only selection of contents but also the operation of a camera or the like serving as a content creating device can be controlled.

### [Second Embodiment]

Fig. 7 shows a 3G gateway 3 according to another embodiment of the present invention. The same reference numerals as in Fig. 3 denote the same parts in Fig. 7. This embodiment uses a voice recognition unit 38 in place of the DTMF detection unit 36 in the arrangement shown in Fig. 3. In the preceding embodiment, a control signal is created by a push button of the operation unit of the 3G terminal 1 and is detected. This embodiment will exemplify the case wherein control is performed by voice recognition.

When the user of a 3G terminal 1 produces a preregistered voice toward the microphone (included in the voice input/output unit 12 in Fig. 2), the voice recognition unit 38 of the 3G gateway 3 detects it. This makes it possible to select a content by generating a control signal by which the control unit 21 shown in Fig. 5 controls a switch 22. In addition, the operation of a camera or the like which is a content creating device can be controlled.

Using the above 3G gateway enables connection between a 3G network and an IP network, and hence allows videophone communication between a 3G terminal and a personal computer. In addition, this makes it possible for the user to remotely monitor his/her home, office, or the like somewhere outside thereof by using a 3G terminal.

## Claims

1. A communication apparatus which is provided between a first communication network (100) to which a portable terminal (1) is connected and a second communication network (200) having a communication protocol different from that of the first communication network (100), **characterized by** comprising:
protocol conversion means (3) for performing communication protocol conversion between the first communication network and the second communication network; and
detection means (36) for detecting a control signal contained in voice information from the portable terminal (1).

2. An apparatus according to claim 1, wherein a content creating device which delivers a video content coded by a predetermined coding scheme to the portable terminal (1) is connected to the second communication network (200), and said protocol conversion means performs transcoding of video information and voice information between the first communication network and the second communication network.

3. An apparatus according to claim 2, wherein the control signal includes a signal for controlling the content creating device.

4. A communication apparatus provided between a first communication network (100) which mutually connects a plurality of portable information terminals each of which codes voice information and video information by a predetermined coding scheme, multiplexes the pieces of information into one stream signal, and transmits the signal, while receiving one stream signal obtained by coding voice information and video information by the coding scheme and multiplexing the pieces of information, demultiplexing the signal into voice information and video information, and outputting the pieces of information, and a second communication network (200) to which a content creating device which transmits a video content coded by a predetermined coding scheme is connected, **characterized by** comprising:
transcoding means (3) for performing transcoding of video information and voice information between the first communication network and the second communication network; and
multiplex/demultiplex means (32) for multiplexing a voice information output and a video information output coded by said transcoding means and transmitted to the second communication network into one stream signal, and outputting the signal to the first communication network, while demultiplexing the stream signal from the first communication network into the voice information and the video information and outputting the pieces of information to said transcoding means.

5. An apparatus according to claim 4, wherein the voice information includes a control signal for controlling the content creating device, and said apparatus further comprises detection means (36) for detecting the control signal.

6. An apparatus according to claim 1, wherein the control signal comprises a DTMF signal.

7. An apparatus according to claim 1, wherein the control signal comprises a voice signal, and said detection means comprises voice recognition means.

8. An apparatus according to claim 2, wherein the content creating device comprises a video delivery server, and the control signal is used to select a video content.

9. An apparatus according to claim 2, wherein the content creating device comprises a camera, and the control signal is used to control operation of the camera.

10. An apparatus according to claim 1, wherein the first communication network comprises a mobile communication network defined by IMT (International Mobile Telecommunications)-200, and the second communication network comprises an IP (Internet Protocol) communication network.

11. An operation control method for a communication apparatus which is provided between a first communication network (100) to which a portable terminal is connected and a second communication network (200) having a communication protocol different from that of the first communication network (100), **characterized by** comprising:
the protocol conversion step (3) of performing communication protocol conversion between the first communication network and the second communication network; and
the detection step (36) of detecting a control signal contained in voice information from the portable terminal.

12. A method according to claim 11, wherein a content creating device which delivers a video content coded by a predetermined coding scheme to the portable terminal is connected to the second communication network, and in the protocol conversion step, transcoding of video information and voice information is performed between the first communication network and the second communication network.

13. A method according to claim 12, wherein the control signal includes a signal for controlling the content creating device.

14. An operation control method for a communication apparatus provided between a first communication network which mutually connects a plurality of portable information terminals each of which codes voice information and video information by a predetermined coding scheme, multiplexes the pieces of information into one stream signal, and transmits the signal, while receiving one stream signal obtained by coding voice information and video information by the coding scheme and multiplexing the pieces of information, demultiplexing the signal into voice information and video information, and outputting the pieces of information, and a second communication network to which a content creating device which transmits a video content coded by a predetermined coding scheme is connected, **characterized by** comprising:
the transcoding step (3) of performing transcoding of video information and voice information between the first communication network and the second communication network;
the step of multiplexing a voice information output and a video information output coded in the transcoding step and transmitted to the second communication network into one stream signal, and outputting the signal to the first communication network; and
the step of demultiplexing the stream signal from the first communication network into the voice information and the video information and outputting the pieces of information to the transcoding means (36).

15. A method according to claim 14, wherein the voice information includes a control signal for controlling the content creating device, and the method further comprises the detection step of detecting the control signal.

16. A method according to claim 11, wherein the control signal comprises a DTMF signal.

17. A method according to claim 11, wherein the control signal comprises a voice signal, and the detection step comprises the voice recognition step.

18. A method according to claim 12, wherein the content creating device comprises a video delivery server, and the control signal is used to select a video content.

19. A method according to claim 11, wherein the content creating device comprises a camera, and the control signal is used to control operation of the camera.

20. A method according to claim 11, wherein the first communication network comprises a mobile communication network defined by IMT (International Mobile Telecommunications)-200, and the second communication network comprises an IP (Internet Protocol) communication network.
